(19) Europäisches Patentamt
European Patent Office
Office européen des brevets

(11) **EP 2 600 482 A1**

(12) **EUROPEAN PATENT APPLICATION**
published in accordance with Art. 153(4) EPC

(43) Date of publication:
**05.06.2013 Bulletin 2013/23**

(51) Int Cl.:
**H02J 3/46** *(2006.01)*     **H02J 3/32** *(2006.01)*
**H02J 7/00** *(2006.01)*

(21) Application number: **10855339.7**

(22) Date of filing: **09.09.2010**

(86) International application number:
**PCT/JP2010/065470**

(87) International publication number:
**WO 2012/014332 (02.02.2012 Gazette 2012/05)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **30.07.2010 JP 2010172756**

(71) Applicant: **Kabushiki Kaisha Toshiba
Minato-ku,
Tokyo 105-8001 (JP)**

(72) Inventor: **HIRATO, Kota
Tokyo 105-8001 (JP)**

(74) Representative: **Henkel, Breuer & Partner
Patentanwälte
Maximiliansplatz 21
80333 München (DE)**

(54) **OUTPUT DISTRIBUTION CONTROL APPARATUS**

(57)    An output distribution control apparatus (15) determines, on the basis of at least information indicating the demand by loads (22), information indicating the output of generators (23) and restrictions to be imposed on the generators (23) upon operation thereof, and information indicating the amount of power stored in rechargeable batteries (21) and restrictions to be imposed on the rechargeable batteries (21) upon operation thereof, the output distribution of the generators (23), and, when the rechargeable batteries (21) are considered to be one virtual rechargeable battery, the output distribution of the virtual rechargeable battery, such that the cost of fuel to be consumed by the generators (23) will become minimum in a circumstance wherein the restrictions exist. The output distribution control apparatus (15) also determines, on the basis of at least the determined output distribution of the virtual rechargeable battery, and information indicating the amount of power stored in the rechargeable batteries (21) and restrictions to be imposed on the rechargeable batteries (21) upon operation thereof, the output distribution of each of the rechargeable batteries (21), such that the total of controllable remaining powers of the rechargeable batteries (21) will become maximum in a circumstance wherein the restrictions exist, or such that power transmission loss within the power grid of the output distribution control apparatus (15) will become minimum.

F I G. 3

## Description

Technical Field

Embodiments of the present invention relate to an output distribution control apparatus and an output distribution control method, for use in a power system in which secondary batteries are connected together.

Background Art

In recent years, distributed power sources using natural energy, such as photovoltaic generators and wind-power generators, are connected to an electric power system in a fast increasing numbers, as the interest increase in the global environmental problem. Using natural energy, each distributed power source has its output changed as the weather changes, inevitably causing frequency and voltage changes in the electric power system to which it is connected. Therefore, power storage apparatuses such as secondary batteries are usually used, charging/discharging the power, thereby to compensate for the changes in the output of the distributed power source.

Power storage techniques are available, as disclosed in, for example, Jpn. Pat. Appln. KOKAI Publication No. 2006-094649, Jpn. Pat. Appln. KOKAI Publication No. 2007-129803, Jpn. Pat. Appln. KOKAI Publication No. 2007-330017, Jpn. Pat. Appln. KOKAI Publication No. 2008-067418 and Jpn. Pat. Appln. KOKAI Publication No. 2008-141026.

Power storage apparatuses are generally expensive. This has been a bar to the widespread use of, for example, a large-scale photovoltaic station. Very recently, it has been proposed that the secondary batteries for use in electric cars or plug-in hybrid cars should be utilized as power storage apparatuses. It is therefore expected that power storage apparatuses will be used not only in photovoltaic generation, but also in ordinary houses.

Under these circumstances, each power user of the power storage apparatus may fail to utilize the surplus power the secondary batteries generate. It is desirable to not to waste the surplus power. On the other hand, it is required to ensure control surplus to secure the electric power quality, from a viewpoint of the compensation for the output fluctuations at power sources, for example, photovoltaic stations that use natural energy.

In view of the above, it is desired to provide a technique, which secures both the economic efficiency and the electric power quality in a power system having secondary batteries.

Disclosure of Invention

According to an embodiment of the present invention, there is provided an output distribution control apparatus for use in a power system including generators, loads and secondary batteries, which are connected to one another, characterized by comprising: a first output distribution determination unit configured to determine output distributions of the generators and an output distribution of a virtual secondary battery indicative of the secondary batteries regarded as a singular secondary battery, to minimize fuel cost at the generators in presence of operation restrictions, based on at least data representing power demand at the loads, data representing outputs of the generators and operation restrictions thereof, and data representing storage power of the secondary batteries and operation restrictions thereof; and a second output distribution determination unit configured to determine respective output distributions of the secondary batteries, to maximize a total of control surplus of the secondary batteries or to minimize a transmission power loss of the power system in presence of operation restrictions, based on at least the output distribution of the virtual secondary battery, determined by the first output distribution determination unit, and data representing storage power of the secondary batteries and operation restrictions thereof.

Brief Description of Drawings

FIG. 1 is a diagram showing an exemplary configuration of a power system which uses the output distribution control apparatus according to each embodiment of the present invention;
FIG. 2 is a diagram showing an exemplary basic hardware configuration that implements the function of the output distribution control apparatus according to each embodiment;
FIG. 3 is a diagram showing an exemplary function configuration of an output distribution control apparatus according to a first embodiment of the present invention;
FIG. 4 is a flowchart showing an exemplary operation of the output distribution control apparatus according to the first embodiment;
FIG. 5 is a diagram explaining the discretization in a power storage state of a virtual secondary battery used in the first embodiment;

FIG. 6 is a diagram explaining in detail the discretization shown in FIG. 5;

FIG. 7 is a diagram showing an exemplary function configuration of an output distribution control apparatus according to a second embodiment of the present invention;

FIG. 8 is a flowchart showing an exemplary operation of the output distribution control apparatus according to the second embodiment;

FIG. 9 is a diagram explaining branch flows; and

FIG. 10 is a flowchart showing an exemplary operation of the output distribution control apparatus according to the third embodiment of the present invention.

Mode for Carrying Out the Invention Embodiment of the present invention will be described in detail, with reference to the accompanying drawings.

(Features Common to the Embodiments)

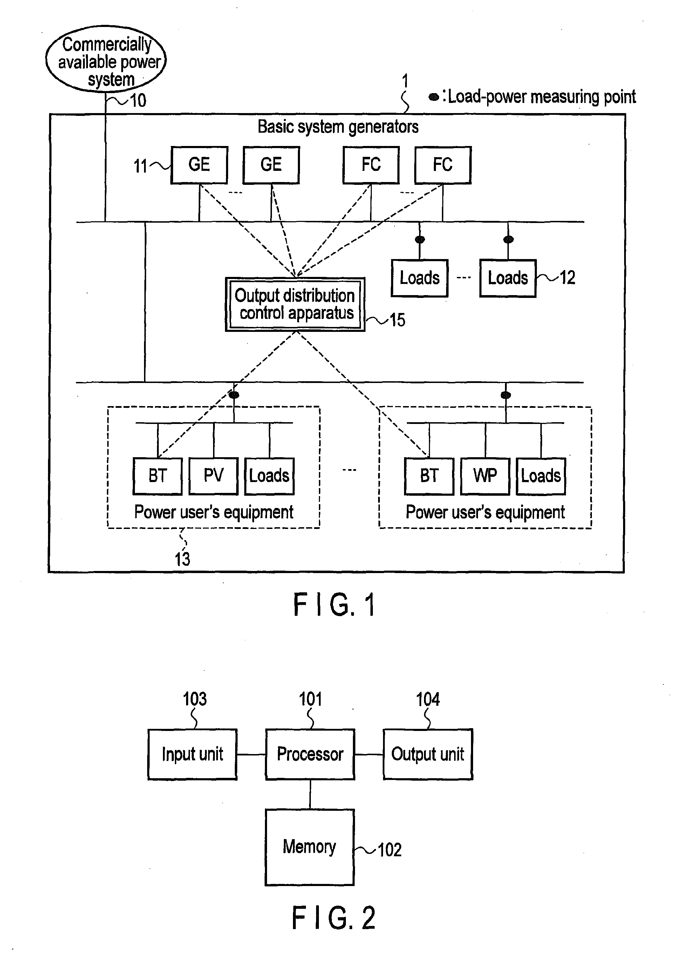

At first, the features common to the embodiments of the present invention will be described with reference to FIG. 1 and FIG. 2.

FIG. 1 is a diagram showing an exemplary configuration of a power system which uses the output distribution control apparatus according to each embodiment of the present invention.

In the power system 1 shown in FIG. 1, a commercially available power system 10 managed by an electric power company, basic system generators 11 including a gas engine (GE) and fuel cells (FC) used to balance the demand and supply of power in the entire system, basic loads 12 (schools, hospitals, factories, etc.), and many power user's equipments 13 (in households, as well), in which secondary batteries installed in, for example, electric cars, plug-in hybrid cars are used as power storage apparatuses (BT), are connected to one another. The power user's equipments 13 include power sources using natural energy, such as photovoltaic generators (PV), wind-power generators (WP), and loads, as well as the power storage apparatuses used as the secondary batteries, respectively.

The power system 1 further includes an output distribution control apparatus 15. For many secondary batteries used as power storage apparatuses in the power system, the output distribution control apparatus 15 performs control to ensure the control surplus of the secondary batteries, in order to suppress the output fluctuations of the distributed power sources installed near the power system and using natural energy, while performing control to ensure the economic efficiency of the generators operating on fossil fuel in the power system, in order to use, to a maximum, the surplus power generated by the secondary batteries. The power consumed by the basic loads 12 and the power consumed by the power user's equipment 13 are measured by meters at load-power measuring points shown in FIG. 1, and the output distribution control apparatus 15 is informed of the results of measuring.

The functions the output distribution control apparatus 15 performs can be implemented as a computer program to be executed by a computer that includes, as shown in FIG. 2, basic hardware items such as a processor 101, a memory 102, an input unit 103 and an output unit 104. In this case, the processor 101 can execute the computer program, using the memory 102 as work area. Further, the processor 101 can perform various setting on the computer program and on the data related to the program, and can cause the output unit 104 to display various data.

(First Embodiment)

The first embodiment will be described below.

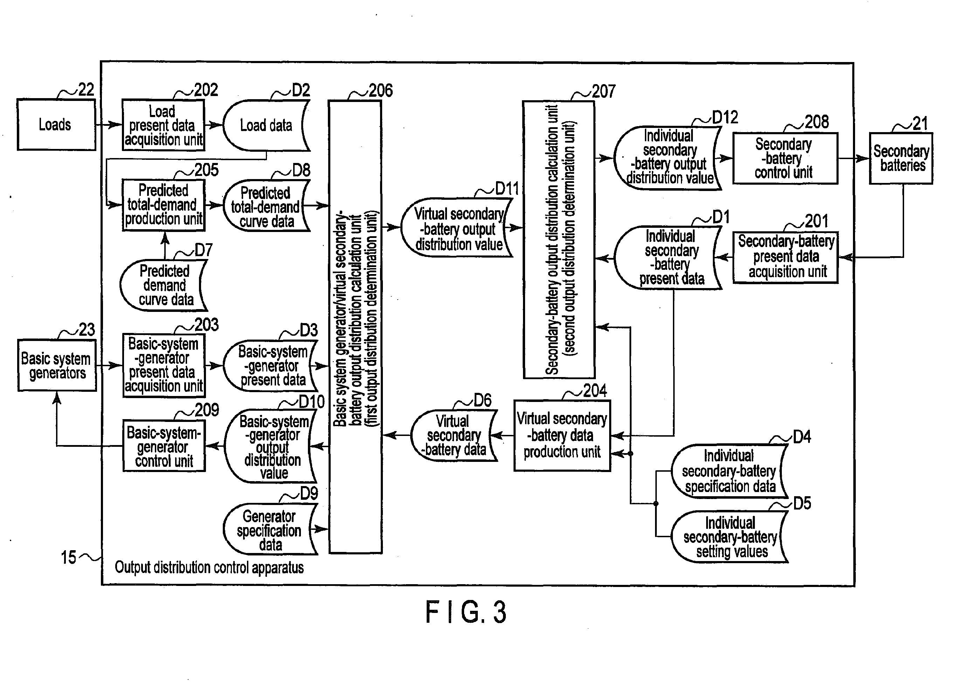

FIG. 3 is a diagram showing an exemplary function configuration of the output distribution control apparatus according to the first embodiment of the present invention.

As shown in FIG. 3, the output distribution control apparatus 15 includes, in the main, a secondary-battery present data acquisition unit 201, a load present data acquisition unit 202, a basic-system-generator present data acquisition unit 203, a virtual secondary-battery data production unit 204, a predicted total-demand production unit 205, a basic system generator/virtual secondary-battery output distribution calculation unit (first output distribution determination unit) 206, a secondary-battery output distribution calculation unit (second output distribution determination unit) 207, a secondary-battery control unit 208, and a basic-system-generator control unit 209.

The secondary batteries 21 shown in FIG. 3 are equivalent to power storage apparatuses (BT) provided in the respective power user's equipments 13 shown in FIG. 1. The loads 22 shown in FIG. 3 are equivalent to the basic loads 12 and the loads of the power user's equipments 13 shown in FIG. 1. The basic system generators 23 shown in FIG. 3 are equivalent to the basic system generators 11 shown in FIG. 1.

The secondary-battery present data acquisition unit 201 may be provided in the secondary batteries 21. The load present data acquisition unit 202 may be provided in the loads 22. The basic-system-generator present data acquisition unit 203 may be provided in the basic system generators 23.

The secondary-battery present data acquisition unit 201 is configured to acquire individual secondary-battery present data D1 representing the present state of each secondary battery 21 (i.e., the present charging/discharging power or storage power).

The load present data acquisition unit 202 is configured to acquire load present data D2 representing the present state of each load 22 (i.e., the present load power detected at each load-power measuring point shown in FIG. 1).

The basic-system-generator present data acquisition unit 203 is configured to acquire basic-system-generator present data D3 representing the present state of each basic system generator 23 (i.e., the present output the generator 23 generates).

The virtual secondary-battery data production unit 204 is configured to produce virtual secondary-battery data D6 that represents the present state of a virtual secondary battery indicative of the secondary batteries 21 regarded as a singular secondary battery, and operation restrictions thereof (for example, present charging/discharging power or storage power, upper and lower limits to the output and capacity of the virtual secondary battery), based on the individual secondary-battery present data D1, individual secondary-battery specification data D4 that represents the specification of each secondary battery 21, and individual secondary-battery setting values D5 that represents the operating limits the power user has set to each secondary battery (for example, upper and lower limits to the output and capacity of the secondary battery the power user has set to each secondary battery). The individual secondary-battery specification data D4 has been registered on-line and the individual secondary-battery setting values D5 have been set on line in advance.

The predicted total-demand production unit 205 is configured to produce predicted total-demand curve data D8 that represents a temporal change of the predicted total-demand, based on the load data D2 and a predicted demand curve data D7 that represents temporal changes of predicted demands required in the loads 22.

The basic system generator/virtual secondary-battery output distribution calculation unit 206 determines basic-system-generator output distribution value (operating schedule) D10 that represents the output distribution value of each of the basic system generators 23, and virtual secondary-battery output distribution value (operating schedule) D11 that represents the output distribution value of the virtual secondary-battery, based on the basic-system-generator present data D3, the virtual secondary-battery data D6, the predicted total-demand curve data D8 and the generator specification data D9 that represents the specifications of the basic system generators 23. In particular, the basic system generator/virtual secondary-battery output distribution calculation unit 206 determines such basic-system-generator output distribution value D10 and virtual secondary-battery output distribution value D11 that the basic system generators 23 may consume least fuel, in the presence of various operation restrictions. For example, the basic system generator/ virtual secondary-battery output distribution calculation unit 206 uses a function containing, as variables, the outputs of the basic system generators 23, and representing the fuel consumption of the basic system generators 23, thereby determining such outputs of the basic system generators 23 as would minimize the fuel cost. Then, the unit 206 subtracts the output of the basic system generators 23 from the power demand at the loads 22, thus calculating the virtual secondary-battery output.

The secondary-battery output distribution calculation unit 207 determines an individual secondary-battery output distribution value (operating schedule) D12 that represents the output distribution value of each of the secondary batteries 21, based on the individual secondary-battery present data D1, the individual secondary-battery specification data D4, the individual secondary-battery setting values D5, and the virtual secondary-battery output distribution value (operating schedule) D11. In particular, the secondary-battery output distribution calculation unit 207 determines the output distribution of each secondary battery 21 so that the total of the control surplus of the secondary batteries 21 may become maximal. For example, the secondary-battery output distribution calculation unit 207 uses a function representing the deviation of power from the intermediate value between upper and lower limits of storage power of each secondary battery 21, thereby calculating the amount of storage power to be held in each secondary battery 21 to minimize that deviation, and then determines the output of each of the secondary batteries 21 from a temporal change of the calculated storage power of each secondary battery 21.

The secondary-battery control unit 208 is configured to control the output of each secondary battery 21, based on the individual secondary-battery output distribution value D12.

The basic-system-generator control unit 209 is configured to control the output of each basic system generator 23, based on the basic-system-generator output distribution value D10.

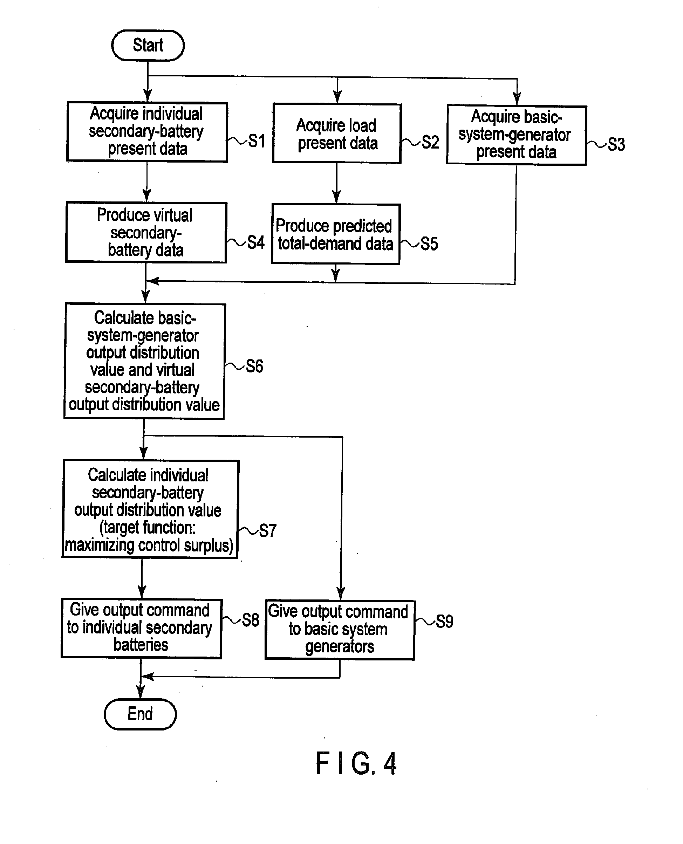

How the output distribution control apparatus 15 configured as described above works will be explained with reference to the flowchart of FIG. 4.

In Step S1, the secondary-battery present data acquisition unit 201 acquires the individual secondary-battery present data D1 representing the present sate of each secondary battery 21 (for example, the present charging/discharging power or storage power).

In Step S2, the load present data acquisition unit 202 acquires the load present data D2 representing the present state of each load 22 (for example, the present load power measured at the associated load-power measuring point shown in FIG. 1).

In Step S3, the basic-system-generator present data acquisition unit 203 acquires the basic-system-generator present data D3 representing the present state of each basic system generator 23 (for example, the present output being generated by the generator 23).

In Step S4, the virtual secondary-battery data production unit 204 produces virtual secondary-battery data D6, based on the individual secondary-battery present data D1 and the individual secondary-battery setting values D5. Since N secondary batteries 21 is considered as one virtual secondary battery, the unit 204 produces the data about all N secondary batteries 21, at time $t_0, \ldots, T$ (or for a time bracket). More specifically, the virtual secondary-battery data production unit 204 uses, for example, the following formulae to produce the data:

$$VES_{t0} = \sum_{i=1}^{N} VBT_{i,t0}$$

$$\overline{VES}_t = \sum_{i=1}^{N} \overline{VBT}_{i,t} \qquad (t = t_0, \cdots, T)$$

$$\underline{VES}_t = \sum_{i=1}^{N} \underline{VBT}_{i,t} \qquad (t = t_0, \cdots, T)$$

$$\overline{ES}_t = \sum_{i=1}^{N} \overline{BT}_{i,t} \qquad (t = t_0, \cdots, T)$$

$$\underline{ES}_t = \sum_{i=1}^{N} \underline{BT}_{i,t} \qquad (t = t_0, \cdots, T)$$

$$\overline{ESV} = \sum_{i=1}^{N} \overline{BTV}_i$$

$$\underline{ESV} = \sum_{i=1}^{N} \underline{BTV}_i$$

where
$\overline{VBT}_{i,t0}$: Individual secondary-battery present storage power
$VES_{i,t0}$: Virtual secondary-battery present storage power
$\overline{VES}_t$: Operating upper limit of virtual secondary-battery capacity
$\underline{VES}_t$: Operating lower limit of virtual secondary-battery capacity
$\overline{VBT}_{i,t}$: Operating upper limit of individual secondary-battery capacity
$\underline{VBT}_{i,t}$: Operating lower limit of individual secondary-battery capacity
$\overline{ES}_t$: Operating upper limit of virtual secondary-battery output
$\underline{ES}_t$: Operating lower limit of virtual secondary-battery output
$\overline{BT}_{i,t}$: Operating upper limit of individual secondary-battery output
$\underline{BT}_{i,t}$: Operating lower limit of individual secondary-battery output
$\overline{ESV}$: Output increasing speed of virtual secondary-battery output
$\underline{ESV}$: Output decreasing speed of virtual secondary-battery output

$\overline{BTV}_i$: Output increasing speed of individual virtual secondary-battery output

$\underline{BTV}_i$: Output decreasing speed of individual virtual secondary-battery output

$t_0$: Present time

T: End of period for calculating virtual secondary-battery power

"Operating upper limit of individual secondary-battery output," and "operating lower limit of individual secondary-battery output" are values the power user has set. "Operating upper limit of individual secondary-battery capacity" and "Operating lower limit of individual secondary-battery capacity" are values of upper and lower limits the power user has set for each time bracket to suppress the fluctuations in the outputs of the distributed power sources using natural energy. These values can be obtained from the individual secondary-battery setting values D5. "Output increasing speed of virtual secondary-battery output" and "output decreasing speed of virtual secondary-battery output" can be obtained from the individual secondary-battery specification data D4.

When the power user wishes to intentionally perform a scheduled operation, the restriction expressed by the following formula may be set:

$$\overline{VBT}_{i,t} = \underline{VBT}_{i,t} = SCH_{i,t} \quad for \; \forall t$$

where $SCH_{i,t}$ is schedule value

In Step S5, the predicted total-demand production unit 205 produces a predicted total-demand curve data D8, based on the load present data D2 and predicted demand curve data D7. More specifically, for example, the following formula may be used:

$$SD'_t = SD_t + (\sum_j LD_{j,t_0} - SD_{t_0}) \quad (t = t_0, \cdots, T)$$

where $LD_{j,t_0}$ is the present load, $SD_t$ is the predicted demand, and $SD'_t$ is the predicted total demand

In Step S6, the basic system generator/virtual secondary-battery output distribution calculation unit 206 produces the basic-system-generator output distribution value D10 and virtual secondary-battery output distribution value (operating schedule) D11, based on the basic-system-generator present data D3, virtual secondary-battery data D6, predicted total-demand curve data D8 and generator specification data D9. Specifically, the unit 206 determines the output distribution value of each of the basic system generators 23 and the virtual secondary battery, respectively, so that the fuel cost may become minimal at the basic system generators 23 in the presence of the restriction. More specifically, the unit 206 determines the output distribution value, by using the following method.

First, a dynamic programming is performed, calculating such an amount of power the virtual secondary battery should store for a preset time in order to minimize the fuel cost at the basic system generators 23.

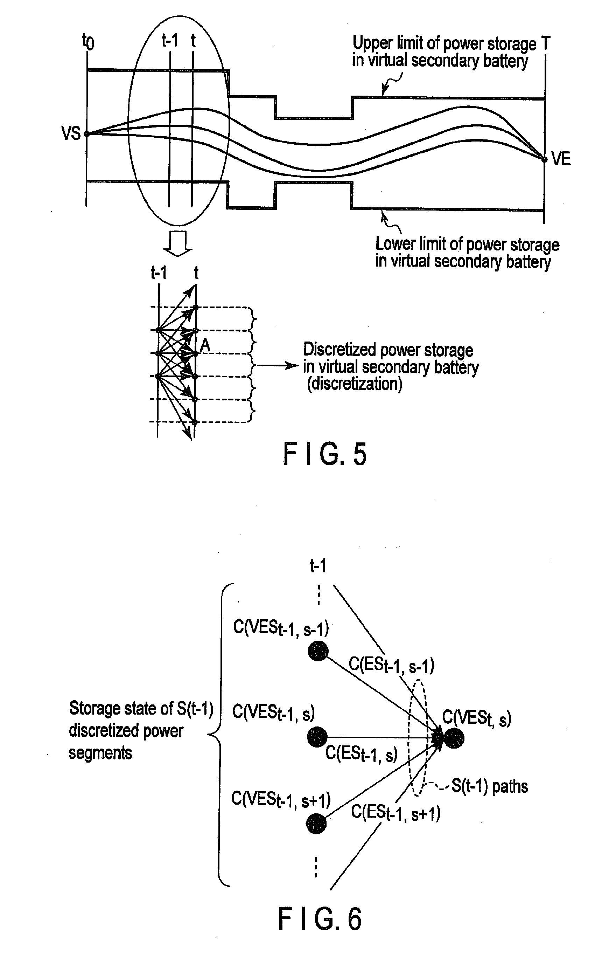

Assume that the storage power the virtual secondary battery may store power, as shown in FIG. 5, from the present time $t_0$ to the time T corresponding to the end of the period for calculating the virtual secondary-battery power. The time T corresponding to the period for calculating the virtual secondary-battery power and the target storage power VE to store at T were the planned values planned yesterday or the targeted values given today by the system operator. If the storage power were handled as a continuous physical quantity, there would be countless paths in which the storage power increases from the present storage power VS to the target storage power VE. Therefore, the storage power is discretized.

Let $S_t$ be the number of power storage states at time t (i.e., number obtained by discretizing power VES into different states). Then, because of the output ES (either charged or discharged), $S_{(t-1)}$ paths exist, each extending from time t-1 when $S_{(t-1)}$ storage stages exist, to time t when a specific power storage state A exists.

In this case, the power VES is discretized at time t-1 into $S_{(t-1)}$ parts, which define $S_{(t-1)}$ discretized fuel costs C (VES). The output ES (either charged or discharged) associated with the power VES discretized at time t-1 into $S_{(t-1)}$ parts results in $S_{(t-1)}$ discretized fuel costs C (ES).

The power $VES_{t-1,s}$ stored at, for example, time t-1, in a given power storage state s ($1 \leq s \leq s_{(t-1)}$) results in fuel cost C ($VES_{t-1,s}$). The output $ES_{t,s}$ (either charged or discharged) associated with the power $VES_{t-1,s}$ results in fuel cost C ($ES_{t-1,s}$).

At this point, a process is performed to select one of the $S_{(t-1)}$ paths, which minimizes C (VES) + C (ES). A similar process is performed on any path to the power storage state other than state A at time t. (That is, the process is performed on all paths to $S_t$ states, respectively.) Further, a similar process is performed on the paths other than the path between time t-1 and time t. (That is, the process is performed on all paths between time to and time T.) To be more specific, the process uses the following formula:

(Basic Formula of Dynamic Programming)

$$C(VES_{t,m}) = \min_{1 \le s \le S(t-1)} [C(VES_{t-1,s}) + C(ES_{t-1,s})] \quad m = 1, \cdots, S(t)$$

(Restriction on Storage Efficiency)

$$VES_t = VES_{t-1} - \begin{cases} ES_t \\ \eta ES_t \end{cases} \quad (t = t_0, \cdots, T)$$

(Restriction on Upper and Lower Limits of Storage)

$$VES_t \le \overline{VES_t}$$

$$VES_t \ge \underline{VES_t}$$

(Restriction on the Output Change Speed)

$$ES_t - ES_{t-1} \le \overline{ESV}$$

$$ES_{t-1} - ES_t \le \underline{ESV}$$

$\eta$: Charge efficiency of the secondary battery

$S(t)$: Power stored at time t

$ES_{t,s}$ that minimizes the fuel cost at the basic system generators 23 can be determined by solving, for example, the following nonlinear programming problem. In most cases, the fuel cost characteristic of the basic system generators can be approximated to a second-degree equation. Hence, it can be formulated as a quadratic programming problem. Any quadratic programming problem can be fast solved, as is well known in the art.

To solve the problem, the following formula is used, in which the target function is "minimizing fuel cost."

$$\sum_k f_k(GP_{k,t}) \to \min$$

where $f_k$ is the fuel cost characteristic of the basic system generators

Further, the following formula is used, in which the restriction applied is "restriction on demand-supply balance."

(However, $ES_t$ is a given value.)

(Restriction on Demand-Supply Balance)

$$SD'_t = \sum_k GP_{k,t} + ES_{t,1} \quad (t = t_0, \cdots, T)$$

(Restriction on Upper and Lower Limits of Generator Output)

$$GP_{k,t} \leq \overline{GP}_k$$

$$GP_{k,t} \geq \underline{GP}_k$$

(Restriction on Speed of Generator Output Change)

$$GP_{k,t-1} - GP_{k,t} \leq \overline{GPv}_k$$

$$GP_{k,t} - GP_{k,t-1} \leq \underline{GPv}_k$$

(Restriction on Upper and Lower Limits of Virtual Battery Output)

$$ES_t \leq \overline{ES}_t$$

$$ES_t \geq \underline{ES}_t$$

In these formulae,
$GP_{k,t}$: Basic-system-generator output
$\overline{GP}_{k,t}$: Upper limit of basic-system-generator output
$\underline{GP}_{k,t}$: Lower limit of basic-system-generator output
$\overline{GPv}_k$: Speed of increasing the basic-system-generator output
$\underline{GPv}_k$: Speed of decreasing the basic-system-generator output
$ES_t$: Output of the virtual secondary battery
$\overline{ES}_t$: Operating upper limit of the virtual secondary battery
$\underline{ES}_t$: Operating lower limit of the virtual secondary battery
Thus, the function $f_k$ representing the fuel cost characteristic of the basic system generators 23, which contains the outputs $GP_{k,t}$ of the generators 23 as variables, is used, calculating such output of the basic system generators 23 as would minimize the fuel cost. Then, the output of the basic system generators 23 is subtracted from the demands at the loads 22, thereby determining the output of the virtual secondary battery.

The "upper limit of basic-system-generator output," "lower limit of basic-system-generator output," "speed of increasing basic-system-generator output" and "speed of decreasing basic-system-generator output" can be determined from the generator specification data D9.

In Step S7, the secondary-battery output distribution calculation unit 207 produces the individual secondary-battery output distribution value D12, based on the virtual secondary-battery output distribution value D11 and individual secondary-battery present data D1. More specifically, the linear programming problem as set forth below may be solved to calculate the individual secondary-battery output distribution value D12. As is well known in the art, any linear programming problem can be fast even if the problem involves in tens of thousands of variables.

For example, the following formula is used, in which the target function is "maximize control surplus (or minimize deviation of power from intermediate value of storage power)".

$$\sum_i | \text{VBT}_{i,t} - \text{VBTref}_{i,t} | \mapsto \min \quad (t = t_0, \cdots, T)$$

where

$$\text{VBTref}_{i,t} = (\overline{\text{VBT}}_{i,t} + \underline{\text{VBT}}_{i,t})/2$$

(Total individual secondary-battery power = virtual secondary-battery power)

$$\sum_i \text{VBT}_{i,t} = \text{VES}_{i,t}$$

(Upper and lower power in individual secondary batteries)

$$\text{VBT}_{i,t} \leq \overline{\text{VBT}}_{i,t}$$

$$\text{VBT}_{i,t} \geq \underline{\text{VBT}}_{i,t}$$

Most secondary batteries available have but a limited capacity. When the storage power reaches the upper limit or lower limit, the power can no longer be compensated for. In order to compensate for output fluctuations, the power is maintained at about an intermediate value as much as possible, thereby to ensure the control surplus at all times.

As a result, the output distribution value of each secondary battery is determined as follows:

$$\text{BT}_{i,t} = \begin{cases} \text{VBT}_{i,t-1} - \text{VBT}_{i,t} & (\text{VBT}_{i,t} < \text{VBT}_{i,t-1} : \text{discharging}) \\ (\text{VBT}_{i,t} - \text{VBT}_{i,t-1})/\eta & (\text{VBT}_{i,t} > \text{VBT}_{i,t-1} : \text{charging}) \\ 0 & (\text{VBT}_{i,t} = \text{VBT}_{i,t-1}) \end{cases}$$

In Step S8, the secondary-battery control unit 208 controls each secondary battery 21, based on the individual secondary-battery output distribution value D12.

In Step S9, the basic-system-generator control unit 209 controls each basic system generator 23, based on the basic-system-generator output distribution value D10.

In the first embodiment, the output distribution control apparatus controls the many secondary batteries provided as power storage apparatuses in the power system, to suppress the changes in the outputs of these distributed power sources installed near in the power system and using natural energy, while ensuring the control surplus for these secondary batteries. The output distribution control apparatus further performs a control, ensuring the economy of the generators operating on fossil fuel in the power system, in order to maximize the use of the surplus power generated by the secondary batteries. Therefore, the apparatus can serve to provide electric power both inexpensive and high in quality. In most cases, many nonlinear programming problems must be solved in order to prepare an optimal schedule of operating the secondary batteries, and the calculation load is inevitably large. In this embodiment, however, calculation is performed on a virtual secondary battery before making calculation on the individual secondary batteries. The calculation load is thereby reduced, and the calculation can be fast performed.

(Second Embodiment)

The second embodiment will be described below.

The components of the second embodiment, which are identical to those of the first embodiment, are designated by the same reference numbers and will not be described in detail. Only the components different from those of the first embodiment will be explained, in the main, in the following description.

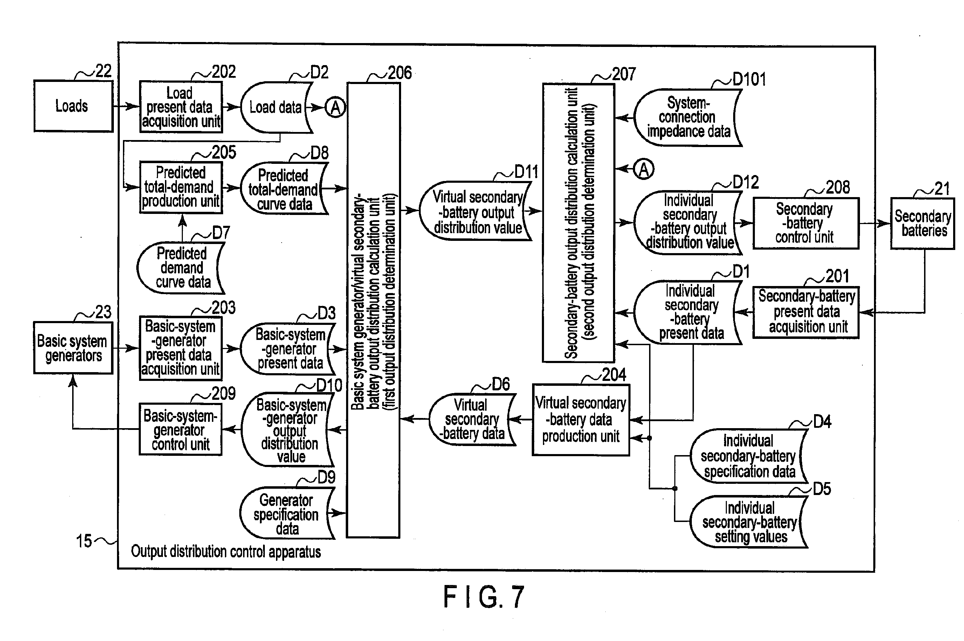

FIG. 7 is a diagram showing an exemplary function configuration of an output distribution control apparatus according to the second embodiment of the present invention.

The output distribution control apparatus 15 (FIG. 7) of the second embodiment differs from the output distribution control apparatus 15 (FIG. 3) of the first embodiment in two respects. First, the secondary-battery output distribution calculation unit 207 uses a formula in which the target function is "minimize transmission power loss" to calculate the individual secondary-battery output distribution value, in place of the formula in which the target function is "maximize control surplus" (i.e., minimizing the deviation from the intermediate value of storage power). Second, the unit 207 acquires system-connection impedance data D101 and the load present data D2 (for example, present load power) in order to calculate the individual secondary-battery output distribution value. The system-connection impedance data D101 is the information showing the connection of the nodes and branches constituting the power system 1 and the impedances (or resistances) at the components of the power system 1. Using the system-connection impedance data D101 and load present data D2, the secondary-battery output distribution calculation unit 207 determines, in the presence of various operation restrictions, the branch flows in the power system and also a flow minimizing the transmission power loss by using a function which includes branch resistances as variables and which represents the transmission power loss in the power system. From these flows, the unit 207 determines the outputs of the respective secondary batteries 21.

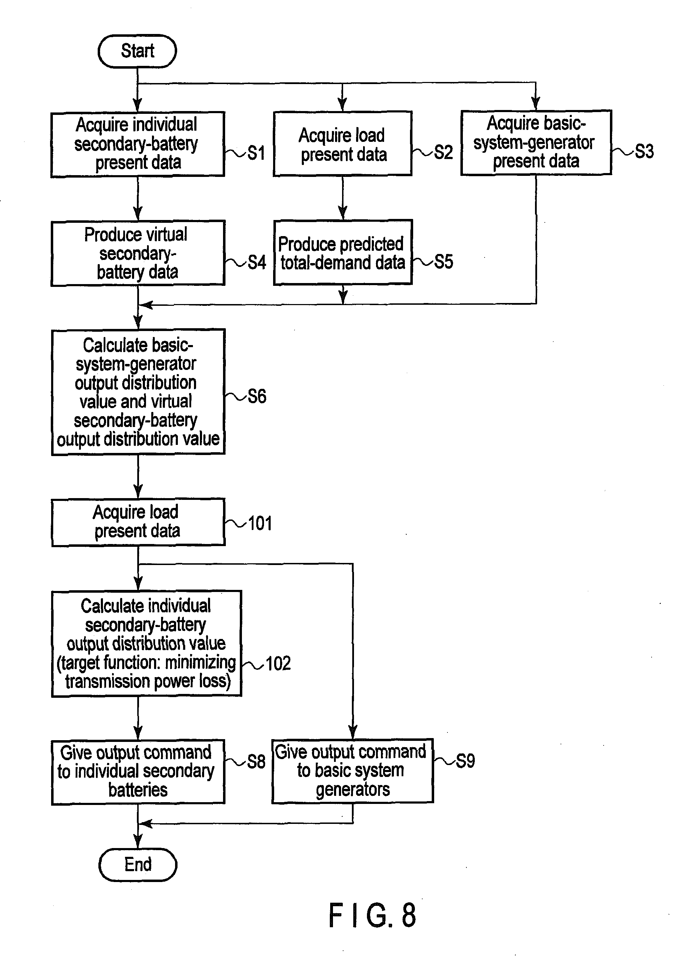

How the output distribution control apparatus 15 configured as described above works will be explained with reference to the flowchart of FIG. 8.

Steps S1 to S6 are identical those described with reference to the flowchart of FIG. 4, and will not be explained.

In Step S101, the secondary-battery output distribution calculation unit 207 acquires the load present data D2 (for example, present load power) and the system-connection impedance data D101. Data D2 and data D101 will be used to calculate the branch flows and transmission power loss, as will be described later.

In the direct-current method, the branch flows are expressed in the following linear equation of node injection power (in which any generator and any load are given a positive value and a negative value, respectively) :

$$\mathbf{F=AP}$$

where

$$F = \begin{pmatrix} F_1 \\ \vdots \\ F_i \\ \vdots \\ F_m \end{pmatrix}, \quad P = \begin{pmatrix} P_1 \\ \vdots \\ P_j \\ \vdots \\ P_n \end{pmatrix}, \quad A = \begin{pmatrix} a_{11} & & \cdots & & a_{1n} \\ & \ddots & & & \\ \vdots & & a_{ij} & & \vdots \\ & & & \ddots & \\ a_{m1} & & \cdots & & a_{mn} \end{pmatrix}$$

Matrix P represents the power injected to each node. Matrix A represents the branch flow at each node. In either matrix, i is one of m branches, and j is one of n nodes.

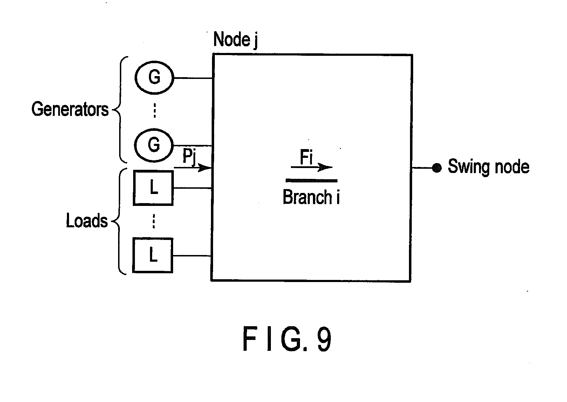

The elements of matrix A are called "flow branch coefficients." As shown in FIG. 9, the flow branch coefficients represent a branch flow Fi that flows into a given branch i if power $P_j$ is injected, in an amount of 1 PU, to a given node j, thereby supplying the power Pi to a swing node (reference node). Hence, the flow branch coefficients can be determined if the flows are calculated by the direct-current method for the number of nodes. That is, if the flows are calculated for one node, one column of matrix A will be obtained. This is why the calculation is repeated as many times as the nodes.

The transmission power loss thus calculated from the branch flow can be approximated to the following formula, as is well known in the art:

$$P_L \approx \sum_{k=1}^{m} r_k F_k^2$$

where $F_k$ is the branch flow flowing in a given branch k, and $r_k$ is the resistance of branch k.

In Step S102, the secondary-battery output distribution calculation unit 207 produces an individual secondary-battery output distribution value D12, based on the virtual secondary-battery output distribution value D11, individual secondary-battery present data D1 and system-connection impedance data D101 acquired in Step S6, Step S1 and Step S101, respectively. More specifically, the individual secondary-battery output distribution value D12 can be produced by solving, for example, the following optimization problem. This is a quadratic programming problem, which can be solved within a practical time.

For example, the following formula is used to solve the optimization problem.

$$\sum_{k=1}^{m} r_k F_{k,t}^2 \rightarrow \min$$

As to the restrictive conditions, the following equation is utilized.

(Total individual secondary-battery power = virtual secondary-battery power)

$$\sum_i VBT_{i,t} = VES_{i,t}$$

(Upper and lower power in individual secondary batteries)

$$VBT_{i,t} \leq \overline{VBT_{i,t}}$$

$$VBT_{i,t} \geq \underline{VBT_{i,t}}$$

(Flow equation)

$$\begin{pmatrix} F_{1,t} \\ F_{2,t} \\ \vdots \\ F_{m,t} \end{pmatrix} = \begin{pmatrix} a_{11} & \cdots & & a_{1n} \\ \vdots & & a_{ij} & \vdots \\ a_{m1} & & \cdots & a_{mn} \end{pmatrix} \begin{pmatrix} BT_{1,t} \\ BT_{2,t} \\ \vdots \\ BT_{n,t} \end{pmatrix}$$

$$BT_{i,t} = \begin{cases} VBT_{i,t-1} - VBT_{i,t} & (VES_{i,t} < VES_{i,t-1} : \text{discharging}) \\ (VBT_{i,t} - VBT_{i,t-1})/\eta & (VES_{i,t} > VES_{i,t-1} : \text{charging}) \\ 0 & (VES_{i,t} = VES_{i,t-1}) \end{cases}$$

Thus, the function representing the transmission power loss in the power system having variables such as branch flow $F_k$ and branch resistance $r_k$ is used, calculating the flows $F_{k,t}$ that minimize the transmission power loss. Then, the power $BT_{i,t}$ injected to the node, generating a flow is used as the output of each secondary battery 21.

Steps S8 and S9 are identical to Steps S8 and S9 explained with reference to the flowchart of FIG. 4, and will not be described.

In the second embodiment, the individual secondary-battery output distribution value is calculated by a method in which the transmission power loss is minimized in accordance with the load state that change from time to time. The second embodiment can therefore achieve the same advantage as the first embodiment.

(Third Embodiment)

The third embodiment will be described below. The components of the third embodiment, which are identical to those of the second embodiment, are designated by the same reference numbers and will not be described in detail. Only the components different from those of the second embodiment will be explained, in the main, in the following description.

The output distribution control apparatus according to the third embodiment is identical in functional configuration to the output distribution control apparatus shown in FIG. 7.

Nonetheless, in the process of calculating the individual secondary-battery output distribution value, the secondary-battery output distribution calculation unit 207 uses a formula in which the target function is "minimize transmission power loss" or "maximize control surplus (or minimize deviation from intermediate value of storage power)." Further, not only the same restrictive conditions are applied as in the second embodiment, but also the flows in the power system are restricted in upper and lower limits. More specifically, the secondary-battery output distribution calculation unit 207 has the function of determining the output of each secondary battery 21, though each flow has upper and lower limits in the power system.

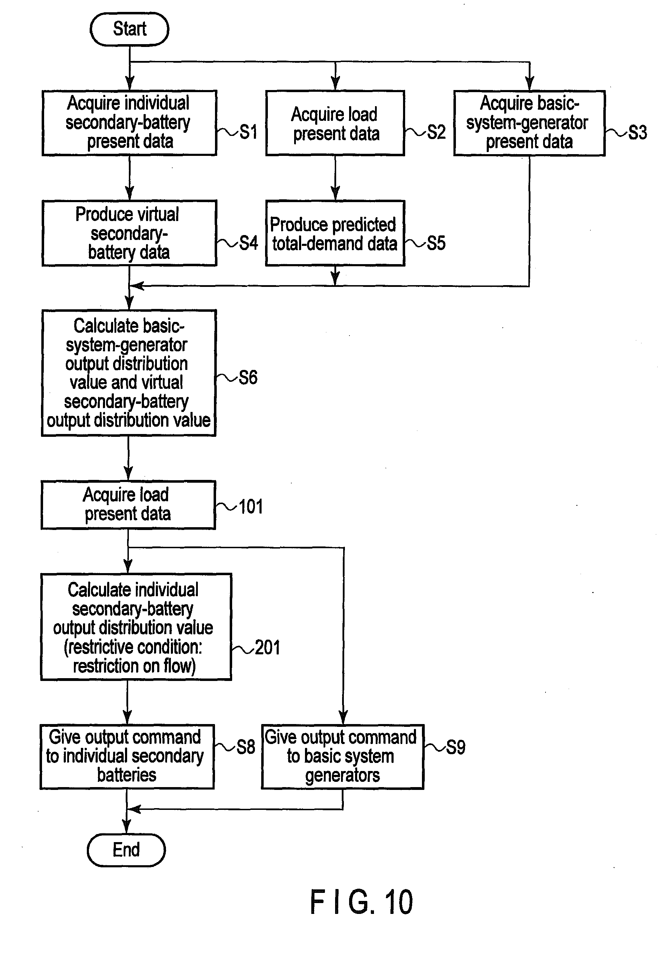

How the output distribution control apparatus 15 configured as described above works will be explained with reference to the flowchart of FIG. 10.

Steps S1 to S6 and Step S101 are identical those described with reference to the flowchart of FIG. 8, and will not be explained.

In Step 201, the secondary-battery output distribution calculation unit 207 produces individual secondary-battery output distribution value D12 by solving such an optimization problem.

For example, the unit 207 uses either a formula in which the target function is "minimize transmission power loss" or a formula in which the target function is "maximize control surplus (or minimize deviation from intermediate value of storage power)." This is a quadratic programming problem, which can be solved within a practical time.

$$\sum_{k=1}^{m} r_k F_{k,t}^2 \rightarrow \min$$

or

$$\sum_i |VBT_{i,t} - VBTref_{i,t}| \rightarrow \min \quad (t = t_0, \cdots, T)$$

where

$$VBTref_{i,t} = (\overline{VBT}_{i,t} + \underline{VBT}_{i,t})/2$$

As to the restrictive conditions, the following equation is utilized.

(Total individual secondary-battery power = virtual secondary-battery power)

$$\sum_i VBT_{i,t} = VES_{i,t}$$

(Upper and lower power in individual secondary batteries)

$$VBT_{i,t} \leq \overline{VBT}_{i,t}$$

$$VBT_{i,t} \geq \underline{VBT}_{i,t}$$

(Flow equation)

$$\begin{pmatrix} F_{1,t} \\ F_{2,t} \\ \vdots \\ F_{m,t} \end{pmatrix} = \begin{pmatrix} a_{11} & \ddots & \cdots & a_{1n} \\ \vdots & & a_{ij} & & \vdots \\ a_{m1} & & \cdots & & a_{mn} \end{pmatrix} \begin{pmatrix} BT_{1,t} \\ BT_{2,t} \\ \vdots \\ BT_{n,t} \end{pmatrix}$$

$$BT_{i,t} = \begin{cases} VBT_{i,t-1} - VBT_{i,t} & (VES_{i,t} < VES_{i,t-1} : discharging) \\ (VBT_{i,t} - VBT_{i,t-1})/\eta & (VES_{i,t} > VES_{i,t-1} : charging) \\ 0 & (VES_{i,t} = VES_{i,t-1}) \end{cases}$$

(Flow restriction)

$$\underline{F}_{i,t} \leq F_{i,t} \leq \overline{F}_{i,t} \quad t = t_0, \cdots, T \quad i = 1, \cdots, m$$

Thus, in Step S201, the secondary-battery output distribution calculation unit 207 calculates a flow that minimizes the transmission power loss in the power system and maximizes the control surplus of the secondary batteries 21 and determines the output of each secondary battery 21 from the flow thus calculated, in the presence of the flow restriction indicating the upper and lower limits of each flow $F_{i,t}$ in the power system.

Steps S8 and S9 are identical to Steps S8 and S9 explained with reference to the flowchart of FIG. 8, and will not be described.

In the third embodiment, the individual secondary-battery output distribution value is calculated in the presence of the flow restriction. This helps to provide electric power of higher quality.

(Summation)

As has been described, according to each embodiment, it is possible to provide a technique, which ensures both the economic efficiency and the electric power quality in a power system having secondary batteries.

The various functions and sequence of processes, used in each embodiment described above, may be stored, as a computer program, in a computer-readable storage medium (for example, a magnetic disk, an optical disk or a semiconductor memory), and may be read and performed, as needed, by a processor. Moreover, such a computer program can be distributed as it is transmitted from a computer to any other computer via a communication medium.

The present invention is not limited to the embodiments described above. The components of any embodiment can be modified in various manners in reducing the invention to practice, without departing from the sprit or scope of the invention. Further, the components of any embodiment described above may be combined, if necessary, in various ways to make different inventions. Moreover, some components of the embodiment described above are not used. Still further, the components of an embodiment may be appropriately combined with those of any other embodiment.

**Claims**

1. An output distribution control apparatus (15) for use in a power system including generators (23), loads (22) and secondary batteries (21), which are connected to one another, **characterized by** comprising:

   a first output distribution determination unit (206) configured to determine output distributions of the generators (23) and an output distribution of a virtual secondary battery indicative of the secondary batteries (21) regarded as a singular secondary battery, to minimize fuel cost at the generators (23) in presence of operation restrictions, based on at least data representing power demand at the loads (22), data representing outputs of the generators (23) and operation restrictions thereof, and data representing storage power of the secondary batteries (21) and operation restrictions thereof; and
   a second output distribution determination unit (207) configured to determine respective output distributions of the secondary batteries (21), to maximize a total of control surplus of the secondary batteries (21) or to minimize a transmission power loss of the power system in presence of operation restrictions, based on at least the output distribution of the virtual secondary battery, determined by the first output distribution determination unit (206), and data representing storage power of the secondary batteries (21) and operation restrictions thereof.

2. The output distribution control apparatus (15) according to claim 1, **characterized in that** the first output distribution determination unit (206) uses a function representing fuel cost at the generators (23) and containing, as variables, outputs of the generators (23), thereby calculating outputs of the generators (23), which minimize the fuel cost, and subtracts the calculated outputs of the generators (23) from the demand at the loads (22), thereby calculating output of the virtual secondary battery.

3. The output distribution control apparatus (15) according to claim 2, **characterized in that** the second output distribution determination unit (207) uses a function representing a deviation of storage power of each secondary battery (21) from an intermediate value between upper and lower limits of the storage power, thereby calculating storage power of each secondary battery (21), which minimizes the deviation, and determines an output of each secondary battery (21) from a temporal change of the calculated storage power.

4. The output distribution control apparatus (15) according to claim 2, **characterized in that** the second output distribution determination unit (207) uses a function representing a transmission power loss in the power system and containing, as variables, flows in the power system, thereby determining flows, which minimize the transmission power loss, and determines an output of each secondary battery (21) from the determined flows.

5. The output distribution control apparatus (15) according to claim 3 or 4, **characterized in that** the second output distribution determination unit (207) determines an output of each secondary battery (21), in presence of a flow restriction indicating upper and lower limits of each flow in the power system.

6. An output distribution control method for use in a power system including generators (23), loads (22) and secondary batteries (21), which are connected to one another, the method **characterized by** comprising:

   determining, in a first output distribution determination unit (206), output distributions of the generators (23) and an output distribution of a virtual secondary battery indicative of the secondary batteries (21) regarded as a singular secondary battery, to minimize fuel cost at the generators (23) in presence of operation restrictions, based on at least data representing power demand at the loads (22), data representing outputs of the generators (23) and operation restrictions thereof, and data representing storage power of the secondary batteries (21) and operation restrictions thereof (S1 to S6); and

determining, in a second output distribution determination unit (207), respective output distributions of the secondary batteries (21), to maximize a total control surplus of the secondary batteries (21) or to minimize a transmission power loss of the power system in presence of operation restrictions, based on at least the output distribution of the virtual secondary battery, determined by the first output distribution determination unit (206), and data representing storage power of the secondary batteries (21) and operation restrictions thereof (S7 to S9).

Commercially available power system ~10

1

●:Load-power measuring point

Basic system generators

11~ | GE | | GE | | FC | | FC |

Loads --- Loads ~12

Output distribution control apparatus ~15

BT | PV | Loads    ---    BT | WP | Loads

Power user's equipment    Power user's equipment

13

F I G. 1

103

101

104

| Input unit | — | Processor | — | Output unit |

Memory ~102

F I G. 2

FIG. 3

```
                        ┌─────────┐
                        │  Start  │
                        └─────────┘
                             │
      ┌──────────────────────┼──────────────────────┐
      ▼                      ▼                       ▼
┌──────────────┐      ┌──────────────┐      ┌──────────────┐
│  Acquire     │      │              │      │  Acquire     │
│ individual   │      │  Acquire     │      │  basic-      │
│ secondary-   │~S1   │  load        │~S2   │ system-      │~S3
│ battery      │      │ present data │      │ generator    │
│ present data │      │              │      │ present data │
└──────────────┘      └──────────────┘      └──────────────┘
      │                      │                      │
      ▼                      ▼                      │
┌──────────────┐      ┌──────────────┐             │
│ Produce      │      │              │             │
│ virtual      │      │ Produce      │             │
│ secondary-   │~S4   │ predicted    │~S5          │
│ battery data │      │ total-demand │             │
│              │      │ data         │             │
└──────────────┘      └──────────────┘             │
      │◄─────────────────────┴─────────────────────┘
      ▼
┌──────────────────┐
│ Calculate basic- │
│ system-generator │
│ output           │
│ distribution     │~S6
│ value and virtual│
│ secondary-battery│
│output distribution│
│ value            │
└──────────────────┘
      │
      ▼
┌──────────────────┐
│ Calculate        │
│ individual        │
│ secondary-battery │
│output distribution│~S7
│ value (target     │
│ function:         │
│maximizing control │
│ surplus)          │
└──────────────────┘
      │                          │
      ▼                          ▼
┌──────────────────┐   ┌──────────────────┐
│ Give output      │   │ Give output      │
│ command to       │~S8│ command to       │~S9
│ individual       │   │ basic system     │
│ secondary        │   │ generators       │
│ batteries        │   │                  │
└──────────────────┘   └──────────────────┘
      │◄──────────────────────┘
      ▼
 ┌─────────┐
 │   End   │
 └─────────┘
```

F I G. 4

Upper limit of power storage T in virtual secondary battery

Lower limit of power storage in virtual secondary battery

Discretized power storage in virtual secondary battery (discretization)

FIG. 5

Storage state of S(t-1) discretized power segments

$C(VES_{t-1, s-1})$

$C(ES_{t-1, s-1})$

$C(VES_{t-1, s})$

$C(ES_{t-1, s})$

$C(VES_{t, s})$

$C(VES_{t-1, s+1})$

$C(ES_{t-1, s+1})$

S(t-1) paths

FIG. 6

FIG.7

21 Secondary batteries

208 Secondary-battery control unit

201 Secondary-battery present data acquisition unit

D4 Individual secondary-battery specification data

D5 Individual secondary-battery setting values

D101 System-connection impedance data

D12 Individual secondary-battery output distribution value

D1 Individual secondary-battery present data

204 Virtual secondary-battery data production unit

207 Secondary-battery output distribution calculation unit (second output distribution determination unit)

(A)

D11 Virtual secondary-battery output distribution value

D6 Virtual secondary-battery data

206 Basic system generator/virtual secondary-battery output distribution calculation unit (first output distribution determination unit)

D2 Load data

(A)

D8 Predicted total-demand curve data

D3 Basic-system-generator present data

D10 Basic-system-generator output distribution value

D9 Generator specification data

202 Load present data acquisition unit

205 Predicted total-demand production unit

D7 Predicted demand curve data

203 Basic-system-generator present data acquisition unit

209 Basic-system-generator control unit

22 Loads

23 Basic system generators

15 Output distribution control apparatus

Start

Acquire individual
secondary-battery
present data ~S1

Acquire load
present data ~S2

Acquire basic-
system-generator
present data ~S3

Produce virtual
secondary-
battery data ~S4

Produce predicted
total-demand data ~S5

Calculate basic-
system-generator
output distribution
value and virtual
secondary-battery
output distribution value ~S6

Acquire load
present data ~101

Calculate individual
secondary-battery
output distribution value
(target function: minimizing
transmission power loss) ~102

Give output command
to individual secondary
batteries ~S8

Give output command
to basic system
generators ~S9

End

F I G. 8

F I G. 9

Start

| Acquire individual secondary-battery present data | ∼S1 | Acquire load present data | ∼S2 | Acquire basic-system-generator present data | ∼S3 |

| Produce virtual secondary-battery data | ∼S4 | Produce predicted total-demand data | ∼S5 |

Calculate basic-system-generator output distribution value and virtual secondary-battery output distribution value ∼S6

Acquire load present data ∼101

Calculate individual secondary-battery output distribution value (restrictive condition: restriction on flow) ∼201

| Give output command to individual secondary batteries | ∼S8 | Give output command to basic system generators | ∼S9 |

End

# F I G. 10

## INTERNATIONAL SEARCH REPORT

| | International application No. |
|---|---|
| | PCT/JP2010/065470 |

**A. CLASSIFICATION OF SUBJECT MATTER**
*H02J3/46(2006.01)i, H02J3/32(2006.01)i, H02J7/00(2006.01)i*

According to International Patent Classification (IPC) or to both national classification and IPC

**B. FIELDS SEARCHED**

Minimum documentation searched (classification system followed by classification symbols)
H02J3/46, H02J3/32, H02J7/00

Documentation searched other than minimum documentation to the extent that such documents are included in the fields searched
Jitsuyo Shinan Koho        1922–1996   Jitsuyo Shinan Toroku Koho   1996–2010
Kokai Jitsuyo Shinan Koho   1971–2010   Toroku Jitsuyo Shinan Koho   1994–2010

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2006-094648 A  (The Kansai Electric Power Co., Inc.), 06 April 2006 (06.04.2006), entire text; all drawings (Family: none) | 1-6 |
| A | JP 2010-098793 A  (Osaka Gas Co., Ltd.), 30 April 2010 (30.04.2010), entire text; all drawings (Family: none) | 1-6 |
| A | JP 2008-067481 A  (University of the Ryukyus), 21 March 2008 (21.03.2008), entire text; all drawings (Family: none) | 1-6 |

☒  Further documents are listed in the continuation of Box C.      ☐  See patent family annex.

| | |
|---|---|
| *     Special categories of cited documents: | "T"  later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"  document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"  document member of the same patent family |

| Date of the actual completion of the international search | Date of mailing of the international search report |
|---|---|
| 01 November, 2010 (01.11.10) | 09 November, 2010 (09.11.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

| | INTERNATIONAL SEARCH REPORT | International application No. |
|---|---|---|
| | | PCT/JP2010/065470 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2003-163013 A  (Nippon Telegraph And Telephone Corp.), 06 June 2003 (06.06.2003), entire text; all drawings (Family: none) | 1-6 |

Form PCT/ISA/210 (continuation of second sheet) (July 2009)

**EP 2 600 482 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006094649 A
- JP 2007129803 A
- JP 2007330017 A
- JP 2008067418 A
- JP 2008141026 A